# EUROPÄISCHE PATENTSCHRIFT

(11) **EP 3 093 170 B1**
(45) Veröffentlichungstag und Bekanntmachung des Hinweises auf die Patenterteilung: **22.11.2017**
(21) Anmeldenummer: 16001040.1
(22) Anmeldetag: 07.05.2016
(51) Int. Cl.: B60G 17/06, B60G 17/0165, B60G 17/018, B60G 17/0195, B60W 30/02, B60W 40/06, B60W 50/00

(54) **VERFAHREN UND VORRICHTUNG ZUR REGELUNG ODER STEUERUNG EINER SEMIAKTIVEN DÄMPFEREINRICHTUNG EINES KRAFTFAHRZEUGS**
METHOD AND DEVICE FOR REGULATING OR CONTROLLING A SEMI-ACTIVE DAMPER DEVICE OF A MOTOR VEHICLE
PROCEDE ET DISPOSITIF DE REGLAGE OU DE COMMANDE D'UN DISPOSITIF D'AMORTISSEMENT SEMI-ACTIF D'UN VEHICULE AUTOMOBILE

(30) Priorität: 08.05.2015 DE 102015005966
(43) Veröffentlichungstag der Anmeldung: 16.11.2016
(73) Patentinhaber: MAN Truck & Bus AG, 80995 München (DE); Hitachi Automotive Systems Europe GmbH, 85445 Schwaig-Oberding (DE)
(72) Erfinder: Wagner, Philipp, 86316 Friedberg (DE); Fleischhacker, Jan, 82140 Olching (DE); Ille, Thomas, 82223 Eichenau (DE); Weinfurter, Heinz, 4522 Sierning (AT); Gleichweit, Martin Kurt, 8700 Leoben (AT); Rosenberger, Martin, 8181 St. Ruprecht/Raab (AT); Funke, Joachim, 64853 Otzberg (DE); Lion, Alexander, 34314 Espenau (DE); Horn, Martin, 8045 Graz (AT)
(74) Vertreter: v. Bezold & Partner Patentanwälte - PartG mbB

(56) Entgegenhaltungen:
- EP-A1- 0 518 056
- EP-A2- 1 524 136
- DE-A1- 3 421 253
- DE-A1- 3 923 929
- DE-A1- 10 344 053
- US-A- 5 015 007

## Beschreibung

Die Erfindung betrifft ein Verfahren und eine Vorrichtung zur Regelung oder Steuerung einer semiaktiven Dämpfereinrichtung eines Kraftfahrzeugs, insbesondere Nutzfahrzeugs.

Bei der Auslegung von Fahrwerkregelsystemen ist stets ein Kompromiss notwendig zwischen Komfort und Fahrsicherheit. Ein ideales Fahrwerk soll die durch Fahrbahnunebenheiten angeregten Schwingungen möglichst gut dämpfen und gleichzeitig die Radaufstandskräfte möglichst konstant auf einem vorgegebenem Wert halten, weil hierdurch die Räder das höchste Längs- und Seitenführungspotential haben und das Fahrzeug mit optimaler Sicherheit führen.

Die gegenwärtig vorhandenen Dämpfersysteme in Fahrzeugen sind in drei Gruppen einteilbar: passive, semiaktive und aktive Dämpfersysteme. Bei passiven Dämpfersystemen sind die Größe und die Richtung der von dem Dämpfer ausgeübten Kraft nur abhängig von der relativen Geschwindigkeit des Dämpfers. In passiven Dämpfersystemen ist eine Veränderung der Dämpferkraft während des Fahrbetriebes nicht vorgesehen. Die Abstimmung eines Fahrzeugs mit passiven Stoßdämpfern stellt immer nur einen Kompromiss dar, da unterschiedliche Fahrzustände mit derselben Fahrwerkseinstellung abgedeckt werden müssen.

Eine Lösung für diesen Zielkonflikt besteht im Einsatz semiaktiver Stoßdämpfer, die es ermöglichen, die Dämpferkennlinien über einen weiten Bereich per elektronischer Ansteuerung zu verändern, und damit für unterschiedliche Fahrsituationen innerhalb weniger Millisekunden eine optimale Dämpfereinstellung bereitzustellen. Aber auch für unterschiedliche Beladungszustände, die insbesondere im Nutzfahrzeug große Unterschiede bezüglich Gesamtmasse und Schwerpunktlage bewirken können, können geeignete Dämpfervoreinstellungen gewählt werden, die einer einzigen Abstimmung passiver Dämpfer überlegen sind.

Bei semiaktiven Dämpfersystemen kann deren Dämpfercharakteristik bzw. Kraft-Geschwindigkeitskennlinie während der Fahrt schnell und über einen weiten Bereich verändert werden. Insbesondere können solche Stoßdämpfer auf (proportionalen) Verstellventilen beruhen, die den Ölfluss verändern (engl. *Continuous Damping Contron*), oder auf magneto- oder elektrorheologischen Flüssigkeiten, wobei ein magnetisches oder elektrisches Feld die Viskosität der Flüssigkeit und damit die Dämpfkraft beeinflusst. Es sind auch Kombinationen der Technologien aus der Praxis bekannt. Auf diese Art und Weise können verschiedene Regelungsprogramme mittels eines Stellelementes in Abhängigkeit von der aktuellen Fahrsituation die optimale Dämpferkraft einstellen. Bei aktiven Dämpfersystemen wird über einen Aktuator die gewünschte Kraft in jeglicher Richtung bereitgestellt, unabhängig von der relativen Geschwindigkeit des Dämpfers.

Im Stand der Technik wurden bereits zahlreiche Verfahren zur Regelung oder Steuerung der Dämpferkraft verstellbarer Dämpfer vorgeschlagen.

So ist in der DE 101 26 933 A1 ein Verfahren offenbart, bei dem die Regelung oder Steuerung in Abhängigkeit von der Dämpfergeschwindigkeit erfolgt und die Dämpfergeschwindigkeitssignale mittels Abstandssensoren und Differenzbildung der Abstandssensorensignale über eine festgelegte Zeitdifferenz ermittelt werden.

Die DE 100 35 150 A1 offenbart ein Fahrzeug mit steuerbaren Schwingungsdämpfern, deren Dämpfungseigenschaften abhängig von der Höhe des Bremsdruckes eingestellt werden, wobei gegebenenfalls zusätzlich auch noch eine von der Fahrzeuggeschwindigkeit abhängige Regelung möglich ist. Die Dämpfungseigenschaften sind dabei durch Kennlinien darstellbar, die entweder eine "harte" Einstellung, also eine große Dämpfung, oder eine "weiche" Einstellung, also eine geringe Dämpfung, erlauben. Abhängig vom Bremsdruck wird hier eine mindestens kurzzeitige Einstellung auf eine "harte" Kennlinie durchgeführt.

DE 10 2004 053 695 A1 offenbart ein Verfahren zur Dämpfung von Karosserie-, Fahrwerks- oder Radschwingungen eines Kraftfahrzeugs, bei dem über Sensoren ein Bremszustand des Kraftfahrzeugs detektiert wird und bei dem jeweils die Aufbaubeschleunigungen und die Fahrwerks- oder Radbeschleunigungen separat über Sensoren ermittelt werden. Gemäß diesem Verfahren wird nach Erkennen eines Bremszustandes und nach Überschreiten eines Grenzwertes der über Sensoren ermittelten Aufbaubeschleunigung und/oder Radbeschleunigung während einer ersten Schwingungsperiode der Karosserie solange eine harte Dämpfungscharakteristik für die betroffenen Räder oder Achsen eingestellt und beibehalten, bis durch die über Sensoren ermittelten Aufbaubeschleunigungen und/oder Radbeschleunigungen eine Umkehr der Radlast oder eine Verminderung der Radlast unter einen Mindestwert festgestellt wird. Erst danach werden die Dämpfer in der Zug- und Druckstufe innerhalb vorgegebener Dämpferkennlinien geregelt.

Die DE 198 03 370 A1 offenbart ein Verfahren zum Betrieb einer Federungs- und Dämpfungseinrichtung eines Kraftfahrzeugs, bei dem die Dämpfer einzelner Räder bei Vorliegen eines außerhalb der regulären Werte liegenden Beschleunigungssignals gesperrt oder verhärtet werden. Hierdurch soll ein Aufschaukeln der Karosserie verhindert werden.
Die US 4,741,554 zeigt ein Regelungssystem für Fahrwerke von Kraftfahrzeugen, mit dem ein zu starkes Nicken und Aufschaukeln des Fahrzeugs vermieden werden soll. Hierbei erfolgt bei einer Bremsung abhängig von einer über Sensoren ermittelten Höhenstellung der Karosserie eine Umschaltung der Dämpfung auf eine härtere Kennung. Diese härtere Kennung wird für einen bestimmten Zeitraum beibehalten. Im ungebremsten Zustand und oberhalb einer bestimmten Grenzhöhe der Karosserie wird die Dämpfung "weich" geschaltet.
Zur Steuerung und Regelung von semiaktiven Dämpfern sind ferner verschiedene Algorithmen bekannt. So offenbart die EP 0 795 429 A2 ein Verfahren zur Steuerung eines Dämpfers, welches einen sogenannten "Skyhook"-Algorithmus bei normaler Fahrt bereitstellt und beim Bremsen Radlastschwankungen unterdrücken soll. Abhängig von der Schlupfermittlung über einen Vergleich der Raddrehzahlen mit der tatsächlichen Karosseriegeschwindigkeit, abhängig vom Bremsdruck - als Startsignal - und abhängig von der Aufbaubeschleunigung erfolgt hier beim Bremsen eine variable Einstellung der Dämpfungscharakteristik einzelner Stoßdämpfer in der Zug- und in der Druckstufe im Wesentlichen so, dass jeweils nur eines der Charakteristika, also entweder die Zugstufe oder die Druckstufe, variabel geregelt wird, während das jeweils andere "weich" geschaltet ist.
Aus der EP 1 724 131 A1 ist ein Verfahren zur Federung einer Nutzfahrzeugkabine bekannt, bei dem mittels einer Steuereinrichtung ein zu- oder abführbares Zusatzvolumen einer Luftfeder derart zu- oder abschaltbar ist, dass in Hubendbereichen der Luftfeder der Verlauf einer Kraft-Weg-Luftfederkennlinie während einer Ausstell- und/oder Rückstellfederbewegung der Luftfeder in einem ersten und in einem zweiten Bereich keine Steigung aufweist. Gemäß dem Verfahren wird ermittelt, auf welcher Art von Untergrund sich momentan das Fahrzeug befindet, und je nach Untergrundbeschaffenheit wird ein entsprechender Modus der Fahrzeugdämpfung aufgerufen, der Grenzen eines Komfortbereichs innerhalb einer Kraft-Weg-Luftfederkennlinie festlegt.

Ein weiteres relevantes Verfahren zur Regelung einer Dämpfungskraft eines Aufhängungssystems eines Kraftfahrzeugs ist in der US 5 015 007 A1 beschrieben. Bei Fahrzeugen, insbesondere bei Nutzfahrzeugen, können unterschiedliche Beladungszustände sehr starke Unterschiede bezüglich Gesamtmasse und Schwerpunktslage bewirken, so dass die aus dem Stand der Technik bekannten Ansätze zur Steuerung oder Regelung von Dämpfern je nach Fahrsituation und Fahrbahnbeschaffenheit keinen ausreichend guten Kompromiss zwischen Fahrkomfort, Ladungsschonung, Fahrsicherheit und Fahrwerksschonung ermöglichen.

Es ist daher eine Aufgabe der Erfindung, die aus dem Stand der Technik bekannten Ansätze zur Steuerung oder Regelung von Dämpfern dahingehend weiterzubilden, dass unter Berücksichtigung der momentanen Fahrsituation und Fahrbahnbeschaffenheit ein verbesserter Kompromiss zwischen Fahrkomfort, Ladungsschonung, Fahrsicherheit und Fahrwerksschonung erzielt werden kann. Eine weitere Aufgabe ist es, eine Vorrichtung zur Regelung oder Steuerung der Dämpferkraft verstellbarer Dämpfer in Kraftfahrzeugen bereitzustellen, mit der Nachteile herkömmlicher Vorrichtungen vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Zeichnung näher erläutert.

Gemäß einem ersten Gesichtspunkt der Erfindung wird ein Verfahren zur Regelung oder Steuerung einer semiaktiven Dämpfereinrichtung eines Kraftfahrzeugs bereitgestellt. Das Kraftfahrzeug kann insbesondere ein Nutzfahrzeug sein. Die Dämpfereinrichtung semiaktiver Bauart kann zur gedämpften Lagerung eines Fahrwerks, insbesondere einer Fahrzeugachse, oder für eine Aufbaulagerung oder zur gedämpften Lagerung eines Fahrerhauses eines Nutzfahrzeugs vorgesehen sein. Die Dämpfungseigenschaften bzw. die Dämpfungscharakteristik der Dämpfereinrichtung sind dabei durch variable Kennlinien, insbesondere Kraft-Geschwindigkeitskennlinien, darstellbar, die insbesondere eine "harte" Einstellung, also eine große Dämpfung, oder eine "weiche" Einstellung, also eine geringe Dämpfung, erlauben. Wenn nachfolgend auf die Aspekte der Fahrwerksbelastung und/oder Fahrwerksschonung abgestellt wird, beziehen sich diese auf eine hervorgehobene Anwendung der Dämpfereinrichtung zur Fahrwerkslagerung. Entsprechendes gilt dann ebenfalls für die Aspekte der Belastung und Schonung der Fahrerhauslagerungen oder anderer Komponenten, falls die Dämpfereinrichtung hierfür eingesetzt wird, ohne dass dies jeweils explizit erwähnt ist.

Gemäß dem Verfahren wird eine auf die Dämpfereinrichtung wirkende Belastung bestimmt. Die Belastung wird als momentane Belastung fortlaufend, d. h. in kurzen Zeitabständen bestimmt. Falls die bestimmte Belastung kleiner gleich einer vorbestimmten Belastungsschwelle ist, wird eine erste Dämpfercharakteristik für die Dämpfereinrichtung, vorzugsweise eine komfortable, den Fahrer und die Ladung entlastende Einstellung, z. B. in Form einer "weichen" Kennlinie, eingestellt oder beibehalten, falls diese schon eingestellt ist. Falls die bestimmte Belastung die vorbestimmte Belastungsschwelle überschreitet, wird die eingestellte erste Dämpfercharakteristik vorerst für die Dauer einer Verzögerungszeit beibehalten.

Nach Ablauf der Verzögerungszeit wird eine für einen Fahrer des Kraftfahrzeugs im Vergleich zur ersten Einstellung der Dämpfereinrichtung weniger komfortable, d. h. härtere zweite Dämpfercharakteristik, z. B. in Form einer "harten" Kennlinie", eingestellt, falls die auf die Dämpfereinrichtung wirkende Belastung während der Verzögerungszeit nicht wieder unter die vorbestimmte Belastungsschwelle gesunken ist. Die zweite Dämpfercharakteristik ist im Vergleich zur ersten Dämpfercharakteristik vorzugsweise so zu wählen, dass der Fahrkomfort für den Fahrer spürbar reduziert wird.

Belastungen, die für eine längere Zeit über der Belastungsschwelle liegen, können unter Umständen zu Beeinträchtigungen der Lebensdauer der Dämpfereinrichtung und der damit gelagerten Komponenten führen. Derartige Belastungen können im Fahrbetrieb von einem schlechten Fahrbahnzustand, d. h. einer Fahrbahn mit starken Fahrbahnunebenheiten, oder durch Fahren mit hoher Fahrzeuggeschwindigkeit auf Fahrbahnen mit zumindest schwachen Fahrbahnunebenheiten verursacht werden.

Erfindungsgemäß wird somit bei Überschreitung der Belastungsschwelle nicht sofort auf eine härtere, die Fahrwerksbelastung reduzierende Dämpfungseinstellung gewechselt, um bei kurzen Schlechtwegabschnitten den Fahrer und die Ladung, falls vorhanden, nicht unnötigerweise einer unkomfortablen und weniger schonenden Dämpfung auszusetzen. Nur falls die Belastungsschwelle dauerhaft für zumindest die Dauer der Verzögerungszeit überschritten wird, wird auf eine härtere, für den Fahrer weniger komfortable Einstellung der Dämpfung gewechselt, bei der eine härtere Dämpfercharakteristik zur Wirkung gelangt, um Lebensdauerbeeinträchtigungen der Dämpfereinrichtung und der damit gelagerten Komponenten zu vermeiden. Dadurch kann die Dämpfungscharakteristik bzw. Kennlinie je nach Fahrsituation und Fahrbahnbeschaffenheit geeignet angepasst werden, um insbesondere für Nutzfahrzeuge mit potentiell stark unterschiedlichen Beladungszuständen einen guten Kompromiss zwischen Fahrkomfort, Ladungsschonung einerseits und Fahrwerksschonung und Lebensdaueroptimierung andererseits zu ermöglichen. Die Verzögerungszeit kann beispielsweise einen Wert aufweisen, der im Bereich von 2 bis 30 Sekunden, weiter vorzugsweise im Bereich von 4 bis 15 Sekunden liegt.

Ein weiterer Vorzug der Erfindung liegt darin, dass mit dem Wechsel auf eine härtere, für den Fahrer weniger komfortable Einstellung der Dämpfungscharakteristik dem Fahrer gleichzeitig ein haptisches Feedback bereitgestellt wird, um ihn darauf hinzuweisen, dass seine aktuelle Fahrweise zu einer starken Fahrwerksbelastung führt, und der Fahrer dazu bewegt wird, eine geringere, dem aktuellen Fahrbahnzustand besser angepasste Fahrzeuggeschwindigkeit zu wählen. Dies ist insbesondere bei Nutzfahrzeugen vorteilhaft, wo dem Fahrer bei einer weichen bzw. komfortablen Dämpfungseinstellung oftmals nicht bewusst ist, wann beim Durchfahren eines Schlechtwegabschnittes das Fahrwerk einer hohen Belastung ausgesetzt ist.

Gemäß einer weiteren Ausführungsvariante kann eine momentane Fahrbahnzustandsklasse im Hinblick auf Fahrbahnunebenheiten in Abhängigkeit von der bestimmten, auf die Dämpfereinrichtung wirkenden Belastung und einer momentanen Fahrgeschwindigkeit des Kraftfahrzeugs bestimmt werden. Die Einteilung in Fahrbahnzustandsklassen kann beispielsweise dadurch erfolgen, dass in einer Tabelle oder Fahrbahndatenbank Referenzwerte der auf die Dämpfereinrichtung wirkenden Belastung bei gegebener Fahrgeschwindigkeit enthalten sind, die unterschiedlichen Fahrbahnzustandsklassen zugeordnet sind. Durch einen Vergleich der aktuell gemessenen Belastung und Fahrgeschwindigkeit mit den abgespeicherten Referenzwerten kann nun eine Bestimmung der aktuellen Fahrbahnklasse erfolgen. Hohe, auf die Dämpfereinrichtung wirkende Belastungen, die bereits bei kleinen Geschwindigkeiten auftreten, lassen beispielsweise auf starke Fahrbahnunebenheiten und eine schlechte Fahrbahnqualität schließen. Zur Verbesserung der Genauigkeit können ferner zusätzlich momentane Gas- und/oder Bremsanforderungen oder Lenkwinkel mit berücksichtigt werden.

Die Bestimmung der momentanen Fahrbahnzustandsklasse im Hinblick auf Fahrbahnunebenheiten bietet den Vorzug, dass das Verfahren im Rahmen bevorzugter Ausführungsvarianten weiter verbessert werden kann.

Beispielsweise kann jeder Fahrbahnzustandsklasse ein Geschwindigkeitsschwellenwert zugeordnet sein, der einen für diese Fahrbahnzustandsklasse im Hinblick auf Fahrwerksbeanspruchungen oberen Sollgrenzwert angibt. Gemäß dieser Variante kann dem Fahrer ein akustischer und/oder visueller Warnhinweis gegeben werden, falls die bestimmte, an der Dämpfereinrichtung auftretende Belastung die vorbestimmte Belastungsschwelle überschreitet und falls die momentane Fahrgeschwindigkeit den Geschwindigkeitsschwellenwert der bestimmten momentanen Fahrbahnzustandsklasse überschreitet. Der Warnhinweis kann beispielsweise als Warnmeldung im Cockpit, insbesondere in einer Anzeigevorrichtung, angezeigt werden, um den Fahrer auf die unangemessene Fahrgeschwindigkeit hinzuweisen. Der Warnhinweis kann wieder erlöschen, wenn die Reduktion der Fahrgeschwindigkeit wieder zu einem Unterschreiten der Belastungsschwelle führt.

Gemäß einer weiteren Ausführungsvariante kann die Verzögerungszeit in Abhängigkeit von der bestimmten aktuellen Fahrbahnzustandsklasse festgelegt werden, wobei zumindest einer ersten Fahrbahnzustandsklasse eine kürzere Verzögerungszeit zugeordnet ist als Fahrbahnzustandsklassen, die im Vergleich zu ersten Fahrbahnzustandsklasse einem besseren Fahrbahnzustand entsprechen. Mit anderen Worten wird bei schlechten Fahrbahnzuständen, d. h. bei starken Fahrbahnunebenheiten, eine kürzere Verzögerungszeit ausgewählt als bei guten Fahrbahnzuständen, so dass bei schlechten Fahrbahnzuständen schneller auf die fahrwerkschonende Dämpfereinstellung gewechselt wird.

Gemäß einer weiteren Ausführungsform erfolgt eine fortlaufende Überwachung von Fahrdynamikregelsystemen des Kraftfahrzeugs, insbesondere eines Antiblockiersystems (ABS), einer Antriebsschlupfregelung (ASR) oder einer elektronischen Stabilitätskontrolle (ESC). Wird hierbei ein Eingriff eines der Fahrdynamikregelsysteme erkannt, erfolgt unmittelbar eine Einstellung eines der Fahrsicherheit maximal zuträglichen Betriebszustands der Dämpfereinrichtung, da das Vorliegen einer sicherheitskritischen Fahrsituation unterstellt wird. Der vorgenannten Anpassung der Dämpfercharakteristik als Kompromiss aus Fahrkomfort und Schonung einer Ladung einerseits und Fahrwerksschonung andererseits wird somit eine Regelung oder Steuerung überlagert, die sicherheitskritische Manöver erkennt und behandelt. Die Einstellung eines der Fahrsicherheit maximal zuträglichen Betriebszustands der Dämpfereinrichtung bedeutet in der Regel, dass die Dämpfer der Dämpfereinrichtung auf ihre härtesten Kennlinien eingestellt werden. Die "unmittelbare" Einstellung dieses Betriebszustands der Dämpfereinrichtung bedeutet insbesondere, dass diese unabhängig von und mit höherer Priorität als die Einstellung der ersten und zweiten Dämpfercharakteristik vorgenommen wird.

Zur Bestimmung der auf die Dämpfereinrichtung wirkenden Belastung können mittels einer Dämpfersensorik in an sich bekannter Weise Aufbaubeschleunigungen, z. B. eine Beschleunigung des Fahrzeugaufbaus zum Rad oder zur Achse, und/oder Federwege der Dämpfereinrichtung bestimmt werden. Die vorbestimmte Belastungsschwelle kann durch vorbestimmte Schwellenwerte für die Achsbeschleunigungen, Rahmenbeschleunigungen und/oder Federwege vorgegeben sein. Die Schwellenwerte werden vorab spezifisch für das Fahrzeug festgelegt, beispielsweise anhand von Prüfstandsdaten oder Simulationsrechnungen.

Ferner ist es besonders vorteilhaft, die auf die Dämpfereinrichtung wirkenden Belastungen, z. B. die Aufbaubeschleunigungen, Federwege etc., mittels gleitender Mittelwerte zu bestimmen. Auf diese Weise kann vermieden werden, dass die Dämpfercharakteristik nicht aufgrund von Einzelereignissen, z. B. eines einzelnen Schlaglochs, verändert wird.

Die semiaktive Dämpfereinrichtung kann elektrorheologische Dämpfer, magnetorheologische Dämpfer und/oder Dämpfer basierend auf einem Verstellventilsystem umfassen.

Gemäß einem zweiten Gesichtspunkt der Erfindung wird eine Vorrichtung zur Regelung oder Steuerung einer semiaktiven Dämpfereinrichtung mit variabler Dämpferkennlinie eines Kraftfahrzeugs, insbesondere Nutzfahrzeugs, bereitgestellt. Die Vorrichtung umfasst eine semiaktive Dämpfereinrichtung mit variabler Dämpferkennlinie, eine Messeinrichtung zur Ermittlung einer auf die Dämpfereinrichtung wirkenden Belastung und eine Steuereinrichtung zur Regelung oder Steuerung einer Dämpferkraft der semiaktiven Dämpfereinrichtung. Die Steuereinrichtung ist eingerichtet, eine erste Dämpfercharakteristik der Dämpfereinrichtung auszuwählen oder beizubehalten, falls die von der Messeinrichtung ermittelte Belastung kleiner gleich einer vorbestimmten Belastungsschwelle ist. Die Steuereinrichtung ist ferner eingerichtet, falls die ermittelte Belastung die vorbestimmte Belastungsschwelle überschreitet, die eingestellte erste Dämpfercharakteristik für die Dauer einer vorbestimmten Verzögerungszeit beizubehalten und nach Ablauf der Verzögerungszeit eine im Vergleich zur ersten Einstellung der Dämpfereinrichtung härtere zweite Einstellung der Dämpfereinrichtung einzustellen.

Zur Vermeidung von Wiederholungen sollen rein verfahrensgemäß offenbarte Merkmale auch als vorrichtungsgemäß offenbart gelten und beanspruchbar sein.

Die Erfindung betrifft ferner ein Kraftfahrzeug, insbesondere Nutzfahrzeug, mit einer solchen Vorrichtung zur Regelung oder Steuerung einer semiaktiven Dämpfereinrichtung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben.

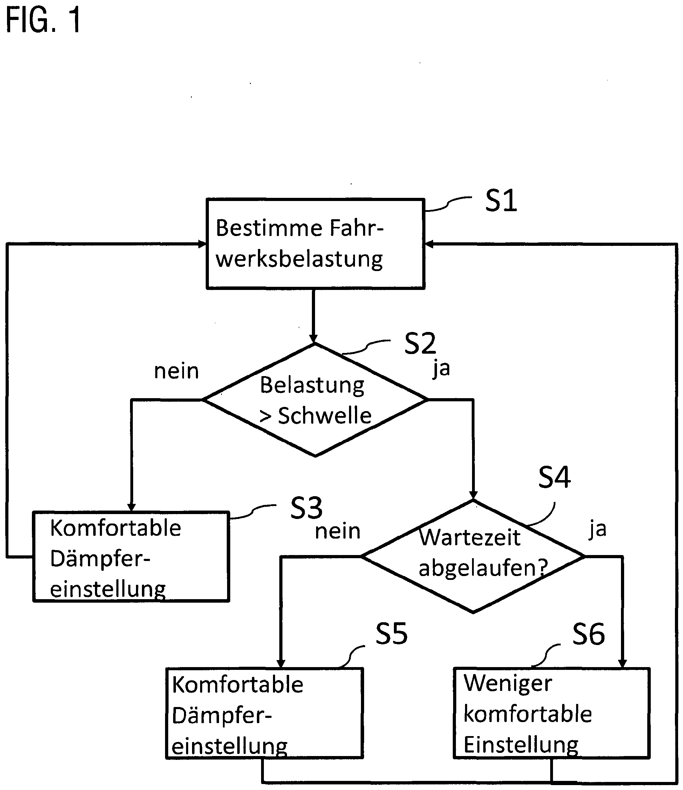

Figur 1 zeigt ein Ablaufdiagramm zur Illustration eines Verfahrens zur Regelung oder Steuerung der Dämpferkraft verstellbarer Dämpfer gemäß einer Ausführungsform der Erfindung.

Gemäß der Ausführungsform ist ein Fahrwerk eines. Nutzfahrzeug mit einer Dämpfereinrichtung semiaktiver Bauart gedämpft gelagert. Die Dämpfungseigenschaften bzw. die Dämpfungscharakteristik der Dämpfereinrichtung sind dabei durch variable Kennlinien, insbesondere Kraft-Geschwindigkeitskennlinien, darstellbar, die eine "harte" Einstellung, also eine große Dämpfung, oder eine "weiche" Einstellung, also eine geringe Dämpfung, erlauben.

Mittels einer Messeinrichtung bzw. Dämpfersensorik wird fortlaufend die Fahrwerksbelastung bestimmt. Hierbei werden in an sich bekannter Weise fortlaufend die Aufbaubeschleunigungen, z. B. eine Beschleunigung des Fahrzeugaufbaus zum Rad oder zur Achse, und die Federwege der Dämpfereinrichtung gemessen. Ferner können Drücke oder Kräfte an der Dämpfungseinrichtung gemessen werden.

Die in Figur 1 gezeigten Schritte S1 bis S6 werden im Fahrbetrieb wiederholt durchlaufen, wobei vorliegend nur ein Durchlauf beschrieben ist.

In Schritt S1 wird eine momentane Fahrwerksbelastung bestimmt und mit einer vorgegebenen Belastungsschwelle verglichen. Die vorbestimmte Belastungsschwelle ist durch vorbestimmte Schwellenwerte für die Achsbeschleunigungen, Rahmenbeschleunigungen und Federwege vorgegeben. Hierbei wird die auf die Dämpfereinrichtung wirkende momentane Belastung anhand der Aufbaubeschleunigungen und Federwege mittels gleitender Mittelwerte bestimmt.

In Schritt S2 wird geprüft, ob die momentane Fahrwerksbelastung, d. h. die Beschleunigung des Fahrzeugaufbaus zum Rad oder zur Achse, und die Federwege der Dämpfereinrichtung die vorgegebenen Schwellenwerte überschreiten und somit einen Zustand überhöhter Fahrwerksbelastung anzeigen, der die Lebensdauer des Fahrwerks und der Dämpfer reduzieren kann, falls er länger andauert.

Überschreitet die momentane Fahrwerksbelastung nicht die vorgegebenen Schwellenwerte, so wird mit Schritt S3 fortgefahren. In Schritt S3 wird eine Dämpfercharakteristik für die Dämpfereinrichtung, vorzugsweise eine komfortable, den Fahrer und die Ladung entlastende Einstellung, z. B. in Form einer "weichen" Kennlinie, eingestellt. Ist diese bereits eingestellt, wird sie beibehalten. Anschließend wird das Verfahren mit Schritt S1 fortgesetzt und eine im nächsten Abtastzeitpunkt vorliegende momentane Fahrwerksbelastung bestimmt.

Ergibt sich in Schritt S2 jedoch, dass die momentane Fahrwerksbelastung die vorgegebenen Schwellenwerte überschreitet, so wird ein Timer gestartet, um den Ablauf einer Verzögerungszeit bestimmen zu können und anschließend mit Schritt S4 fortgefahren. Der Timer wird immer wieder neu gestartet, d. h., die Verzögerungszeit beginnt von Neuem zu laufen, wenn die Belastung zwischenzeitlich wieder unter die vorgegebene Schwelle sinkt und diese anschließend wieder überschreitet.

In Schritt S4 wird bestimmt, ob die Verzögerungszeit, die im Bereich von einigen Sekunden liegt, abgelaufen ist. Falls diese noch nicht abgelaufen ist, wird die eingestellte erste Dämpfercharakteristik beibehalten (Schritt S5). Anschließend wird die Abfolge von Schritten erneut durchlaufen. Bleibt die Belastung für die Dauer der Verzögerungszeit über der vorgegebenen Schwelle, dann wird der Zyklus der Schritte S1, S3, S4 und S5 solange wiederholt durchlaufen, bis die Verzögerungszeit abgelaufen ist und sich im Prüfschritt S4 ergibt, dass die Verzögerungszeit abgelaufen ist. Anschließend wird mit Schritt S6 fortgefahren.

In Schritt S6 wird dann nach Ablauf der Verzögerungszeit eine für den Fahrer des Kraftfahrzeugs im Vergleich zur ersten Einstellung der Dämpfereinrichtung weniger komfortable, d. h. härtere zweite Dämpfercharakteristik, z. B. in Form einer "harten" Kennlinie, eingestellt. Die zweite Dämpfercharakteristik ist im Vergleich zu ersten Dämpfercharakteristik so gewählt, dass der Fahrkomfort für den Fahrer spürbar reduziert wird, um den Fahrer zur Wahl einer geeigneteren, d. h. reduzierteren Fahrgeschwindigkeit zu bewegen und somit die Fahrwerksbelastung zu reduzieren, die ansonsten die Fahrzeuglebensdauer, insbesondere die Lebensdauer der Dämpfer- und Fahrwerkskomponenten, senken können. Anschließend wird wieder ein neuer Zyklus der Verfahrensschritte, beginnend mit Schritt S1, durchlaufen.

Das Durchlaufen der Schritte S1 bis S6 wird von einer Regelung oder Steuerung überlagert, die sicherheitskritische Manöver erkennt und behandelt (nicht dargestellt). Diese überwacht fortlaufend die Fahrdynamikregelsysteme des Kraftfahrzeugs, insbesondere den automatischen Blockierverhinderer (ABV), die Antriebsschlupfregelung (ASR) oder die elektronische Stabilitätskontrolle (ESC). Wird hierbei ein Eingriff eines der Fahrdynamikregelsysteme erkannt, erfolgt unmittelbar eine Einstellung eines der Fahrsicherheit maximal zuträglichen Betriebszustands der Dämpfereinrichtung, da das Vorliegen einer sicherheitskritischen Fahrsituation unterstellt wird. Die Einstellung eines der Fahrsicherheit maximal zuträglichen Betriebszustands der Dämpfereinrichtung bedeutet in der Regel, dass die Dämpfer der Dämpfereinrichtung auf ihre härtesten Kennlinien eingestellt werden. Die Einstellung erfolgt unmittelbar nach Erkennung des Eingriffs des Fahrdynamikregelsystems, mit höherer Priorität als die Schritte S1 bis S6.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

## Patentansprüche

1. Verfahren zur Regelung oder Steuerung einer semiaktiven Dämpfereinrichtung eines Kraftfahrzeugs, insbesondere Nutzfahrzeugs, umfassend die Schritte:
Bestimmung einer auf die Dämpfereinrichtung und damit auf das Fahrzeug wirkenden Belastung (S1);
falls die bestimmte Belastung kleiner gleich einer vorbestimmten Belastungsschwelle ist, Einstellung oder Beibehaltung einer ersten Dämpfercharakteristik (S3); und
falls die bestimmte Belastung die vorbestimmte Belastungsschwelle überschreitet, Beibehaltung der eingestellten ersten Dämpfercharakteristik für die Dauer einer Verzögerungszeit und Einstellung einer für einen Fahrer des Kraftfahrzeugs im Vergleich zur ersten Einstellung der Dämpfereinrichtung härteren zweiten Dämpfercharakteristik nach Ablauf der Verzögerungszeit, falls die auf die Dämpfereinrichtung wirkende Belastung während der Verzögerungszeit nicht wieder unter die vorbestimmte Belastungsschwelle gesunken ist (S4-S6).

2. Verfahren nach Anspruch 1, **dadurch gekennzeichnet, dass** in Abhängigkeit von der bestimmten, auf die Dämpfereinrichtung wirkenden Belastung und einer momentanen Fahrgeschwindigkeit des Kraftfahrzeugs eine momentane Fahrbahnzustandsklasse im Hinblick auf Fahrbahnunebenheiten bestimmt wird.

3. Verfahren nach Anspruch 2, **dadurch gekennzeichnet,**
(a) **dass** jeder Fahrbahnzustandsklasse ein Geschwindigkeitsschwellenwert zugeordnet ist; und
(b) **dass** dem Fahrer ein akustischer und/oder visueller Warnhinweis gegeben wird, falls die bestimmte, an der Dämpfereinrichtung auftretende Belastung die vorbestimmte Belastungsschwelle überschreitet und falls die momentane Fahrgeschwindigkeit den Geschwindigkeitsschwellenwert der bestimmten momentanen Fahrbahnzustandsklasse überschreitet.

4. Verfahren nach Anspruch 2 oder 3, **dadurch gekennzeichnet, dass** die Verzögerungszeit in Abhängigkeit von der bestimmten aktuellen Fahrbahnzustandsklasse festgelegt wird, wobei zumindest einer ersten Fahrbahnzustandsklasse eine kürzere Verzögerungszeit zugeordnet ist als Fahrbahnzustandsklassen, die im Vergleich zur ersten Fahrbahnzustandsklasse einem besseren Fahrbahnzustand entsprechen.

5. Verfahren nach einem der vorhergehenden Ansprüche, **gekennzeichnet durch**
(a) eine fortlaufende Überwachung von Fahrdynamikregelsystemen des Kraftfahrzeugs, insbesondere eines Antiblockiersystems (ABS), einer Antriebsschlupfregelung (ASR) oder einer elektronischen Stabilitätskontrolle (ESC), und
(b) Einstellung eines der Fahrsicherheit maximal zuträglichen Betriebszustands der Dämpfereinrichtung unmittelbar nach Erkennung eines Eingriffs eines der Fahrdynamikregelsysteme.

6. Verfahren nach einem der vorhergehenden Ansprüche, **dadurch gekennzeichnet, dass** zur Bestimmung der auf die Dämpfereinrichtung wirkenden Belastung Achsbeschleunigungen, Rahmenbeschleunigungen und/oder Federwege bestimmt werden und dass die vorbestimmte Belastungsschwelle durch vorbestimmte Schwellenwerte für die Achsbeschleunigungen, Rahmenbeschleunigungen und/oder Federwege vorgegeben ist.

7. Verfahren nach einem der vorhergehenden Ansprüche, **dadurch gekennzeichnet, dass** die auf die Dämpfereinrichtung wirkende Belastung mittels gleitender Mittelwerte bestimmt wird.

8. Verfahren nach einem der vorhergehenden Ansprüche, **dadurch gekennzeichnet,**
(a) **dass** die semiaktive Dämpfereinrichtung einen elektrorheologischen Dämpfer, einen magnetorheologischen Dämpfer und/oder einen auf einem Verstellventilsystem basierenden Dämpfer umfasst; und/oder
(b) **dass** die Dämpfungsvorrichtung an einer Fahrzeugachse, einer Fahrerhauslagerung und/oder einer Aufbaulagerung angeordnet ist.

9. Vorrichtung zur Regelung oder Steuerung einer semiaktiven Dämpfereinrichtung mit variabler Dämpferkennlinie eines Kraftfahrzeugs, insbesondere Nutzfahrzeugs, umfassend
(a) eine semiaktive Dämpfereinrichtung mit variabler Dämpferkennlinie,
(b) eine Messeinrichtung zur Ermittlung einer auf die Dämpfereinrichtung wirkenden Belastung; und
(c) eine Steuereinrichtung zur Regelung oder Steuerung einer Dämpferkraft der semiaktiven Dämpfereinrichtung, die eingerichtet ist,
(c1) eine erste Dämpfercharakteristik der Dämpfereinrichtung auszuwählen oder beizubehalten, falls die von der Messeinrichtung ermittelte Belastung kleiner gleich einer vorbestimmten Belastungsschwelle ist, und
(c2) falls die ermittelte Belastung die vorbestimmte Belastungsschwelle überschreitet, die eingestellte erste Dämpfercharakteristik für die Dauer einer vorbestimmten Verzögerungszeit beizubehalten und nach Ablauf der Verzögerungszeit eine im Vergleich zur ersten Einstellung der Dämpfereinrichtung härtere zweite Einstellung der Dämpfereinrichtung einzustellen.

10. Kraftfahrzeug, insbesondere Nutzfahrzeug, mit einer Vorrichtung zur Regelung oder Steuerung einer semiaktiven Dämpfereinrichtung nach Anspruch 9.

## Claims

1. A method for performing closed-loop or open-loop control of a semi-active damper apparatus of a motor vehicle, in particular utility vehicle, comprising the steps:
determining a load (S1) acting on the damper apparatus and therefore on the vehicle;
if the determined load is less than or equal to a predetermined load threshold, setting or maintaining a first damper characteristic (S3); and
if the determined load exceeds the predetermined load threshold, maintaining the set first damper characteristic for the duration of a delay time and setting a second damper characteristic, which is relatively hard for a driver of the motor vehicle compared to the first setting of the damper apparatus, after the expiry of the delay time if the load acting on the damper apparatus has not dropped back to below the predetermined load threshold during the delay time (S4-S6).

2. The method according to Claim 1, **characterized in that** an instantaneous status class of the underlying surface is determined with respect to unevennesses in the underlying surface as a function of the determined load acting on the damper apparatus and an instantaneous velocity of the motor vehicle.

3. The method according to Claim 2, **characterized**
(a) **in that** each status class of the underlying surface is assigned a velocity threshold value; and
(b) **in that** the driver is provided with an acoustic and/or the visual warning message if the determined load occurring at the damper apparatus exceeds the predetermined load threshold and if the instantaneous velocity exceeds the velocity threshold value of the determined instantaneous status class of the underlying surface.

4. The method according to Claim 2 or 3, **characterized in that** the delay time is defined as a function of the determined current status class of the underlying surface, wherein at least a first status class of the underlying surface is assigned a shorter delay time than status classes of an underlying surface which correspond to a better status of the underlying surface compared to the first status class of the underlying surface.

5. The method according to one of the preceding claims, **characterized by**
(a) continuous monitoring of vehicle movement dynamic control systems of the motor vehicle, of an anti-lock brake system (ABS), of a traction control system (TCS) or of an electronic stability control system (ESC), and
(b) setting an operating state of the damper apparatus which is most beneficial for the driving safety, immediately after the detection of an intervention by one of the vehicle movement dynamic control systems.

6. The method according to one of the preceding claims, **characterized in that** in order to determine the load acting on the damper apparatus, axle acceleration values, frame acceleration values and/or spring travel values are determined, and **in that** the predetermined load threshold is predefined by predetermined threshold values for the axle acceleration values, frame acceleration values and/or spring travel values.

7. The method according to one of the preceding claims, **characterized in that** the load acting on the damper apparatus is determined by means of floating mean values.

8. The method according to one of the preceding claims, **characterized**
(a) **in that** the semi-active damper apparatus comprises an electro-rheological damper, a magneto-rheological damper and/or a damper which is based on a valve adjustment system; and/or
(b) **in that** the damping device is arranged on a vehicle axle, a driver's cab mount and/or a body mount.

9. A device for performing a closed-loop or open-loop control of a semi-active damper apparatus having a variable damper characteristic curve of a motor vehicle, in particular utility vehicle, comprising
(a) a semi-active damper apparatus with a variable damper characteristic curve,
(b) a measuring apparatus for determining a load acting on the damper apparatus; and
(c) a control apparatus for performing closed-loop or open-loop control of a damper force of the semi-active damper apparatus which is configured
(c1) to select or maintain a first damper characteristic of the damper apparatus if the load determined by the measuring apparatus is less than or equal to a predetermined load threshold, and
(c2) if the determined load exceeds the predetermined load threshold, to maintain the set first damper characteristic for the duration of a predetermined delay time, and, after the expiry of the delay time, to set a second setting of the damper apparatus which is harder compared to the first setting of the damper apparatus.

10. A motor vehicle, in particular a utility vehicle, having a device for performing closed-loop or open-loop control of a semi-active damper apparatus according to Claim 9.

## Revendications

1. Procédé de réglage ou de commande d'un dispositif d'amortissement semi-actif d'un véhicule automobile, en particulier d'un véhicule utilitaire, comprenant les étapes suivantes:
détermination d'une charge agissant sur le dispositif d'amortissement et dès lors sur le véhicule (S1);
dans le cas où la charge déterminée est inférieure ou égale à un seuil de charge prédéterminé, réglage ou maintien d'une première caractéristique d'amortissement (S3) ; et
dans le cas où la charge déterminée dépasse le seuil de charge prédéterminé, maintien de la première caractéristique d'amortissement réglée pendant la durée d'un temps de retard et réglage d'une deuxième caractéristique d'amortissement plus dure pour un conducteur du véhicule automobile par comparaison avec le premier réglage du dispositif d'amortissement après expiration du temps de retard, dans le cas où la charge agissant sur le dispositif d'amortissement n'est pas redescendue en dessous du seuil de charge prédéterminé pendant le temps de retard (S4 - S6).

2. Procédé selon la revendication 1, **caractérisé en ce que** l'on détermine une classe instantanée de l'état de la chaussée en ce qui concerne les inégalités de la chaussée en fonction de la charge déterminée agissant sur le dispositif d'amortissement et d'une vitesse de roulage instantanée.

3. Procédé selon la revendication 2, **caractérisé en ce que**
(a) à chaque classe d'état de la chaussée est associée une valeur de seuil de vitesse; et
(b) un avertissement acoustique et/ou visuel est envoyé au conducteur, dans le cas où la charge déterminée apparaissant au dispositif d'amortissement dépasse le seuil de charge prédéterminé et dans le cas où la vitesse de roulage instantanée dépasse la valeur du seuil de vitesse de la classe d'état de la chaussée instantanée déterminée.

4. Procédé selon la revendication 2 ou 3, **caractérisé en ce que** l'on fixe le temps de retard en fonction de la classe d'état de la chaussée actuelle déterminée, dans lequel un temps de retard plus court est associé à au moins une première classe d'état de la chaussée qu'à des classes d'état de la chaussée qui correspondent à un meilleur état de la chaussée par comparaison avec la première classe d'état de la chaussée.

5. Procédé selon l'une quelconque des revendications précédentes, **caractérisé par**
(a) une surveillance constante de systèmes de réglage dynamique de roulage du véhicule automobile, en particulier d'un système antiblocage (ABS), d'une régulation anti-patinage (ASR) ou d'un contrôle électronique de stabilité (ESC), et
(b) le réglage d'un état de fonctionnement du dispositif d'amortissement tolérable au maximum pour la sécurité de roulage immédiatement après la reconnaissance d'une intervention d'un des systèmes de réglage dynamique de roulage.

6. Procédé selon l'une quelconque des revendications précédentes, **caractérisé en ce que** pour la détermination de la charge agissant sur le dispositif d'amortissement on détermine des accélérations d'essieu, des accélérations du châssis et/ou des courses de ressorts et **en ce que** le seuil de charge prédéterminé est prédéfini par des valeurs de seuil prédéterminées pour les accélérations d'essieu, les accélérations de châssis et/ou des courses de ressorts.

7. Procédé selon l'une quelconque des revendications précédentes, **caractérisé en ce que** l'on détermine la charge agissant sur le dispositif d'amortissement au moyen de valeurs moyennes glissantes.

8. Procédé selon l'une quelconque des revendications précédentes, **caractérisé en ce que**
(a) le dispositif d'amortissement semi-actif comprend un amortisseur électro-rhéologique, un amortisseur magnéto-rhéologique et/ou un amortisseur basé sur un système de soupapes de réglage; et/ou
(b) le dispositif d'amortissement est disposé sur un essieu du véhicule, sur un appui de la cabine du conducteur et/ou sur un appui de la carrosserie.

9. Dispositif de réglage ou de commande d'un dispositif d'amortissement semi-actif ayant une courbe caractéristique d'amortissement variable d'un véhicule automobile, en particulier d'un véhicule utilitaire, comprenant:
(a) un dispositif d'amortissement semi-actif ayant une courbe caractéristique d'amortissement variable;
(b) un dispositif de mesure pour la détermination d'une charge agissant sur le dispositif d'amortissement; et
(c) un dispositif de commande pour le réglage ou la commande d'une force d'amortissement d'un dispositif d'amortissement semi-actif, qui est conçu pour
(c1) sélectionner et maintenir une première caractéristique d'amortissement du dispositif d'amortissement, dans le cas où la charge déterminée par le dispositif de mesure est inférieure ou égale à un seuil de charge prédéterminé, et
(c2) dans le cas où la charge déterminée dépasse le seuil de charge prédéterminé, maintenir la première caractéristique d'amortissement réglée pendant la durée d'un temps de retard et, après l'expiration du temps de retard, appliquer un deuxième réglage du dispositif d'amortissement plus dur par comparaison avec le premier réglage du dispositif d'amortissement.

10. Véhicule automobile, en particulier véhicule utilitaire, muni d'un dispositif de réglage ou de commande d'un dispositif d'amortissement semi-actif selon la revendication 9.
